(19) Europäisches Patentamt
European Patent Office
Office européen des brevets

(11) EP 4 644 460 A1

(12) EUROPEAN PATENT APPLICATION
published in accordance with Art. 153(4) EPC

(43) Date of publication:
05.11.2025 Bulletin 2025/45

(21) Application number: 24797451.2

(22) Date of filing: 26.04.2024

(51) International Patent Classification (IPC):
*C08G 63/60* (2006.01) *C08G 63/78* (2006.01)

(52) Cooperative Patent Classification (CPC):
C08G 63/60; C08G 63/78

(86) International application number:
PCT/KR2024/005649

(87) International publication number:
WO 2024/225797 (31.10.2024 Gazette 2024/44)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 27.04.2023 KR 20230055419
25.04.2024 KR 20240055648

(71) Applicant: LG CHEM, LTD.
Seoul 07336 (KR)

(72) Inventors:
- LEE, Yeonju
Daejeon 34122 (KR)
- CHO, Suhyun
Daejeon 34122 (KR)
- KIM, Kyeongmin
Daejeon 34122 (KR)
- KIM, Chul Woong
Daejeon 34122 (KR)
- PARK, Byung Hyun
Daejeon 34122 (KR)

(74) Representative: Hoffmann Eitle
Patent- und Rechtsanwälte PartmbB
Arabellastraße 30
81925 München (DE)

# (54) POLY(3-HYDROXYPROPIONIC ACID) POLYMER AND METHOD FOR PREPARING SAME

(57) The present disclosure relates to a poly(3-hydroxypropionic acid) polymer including a novel network structure and a method for preparing the same.

【FIG. 1】

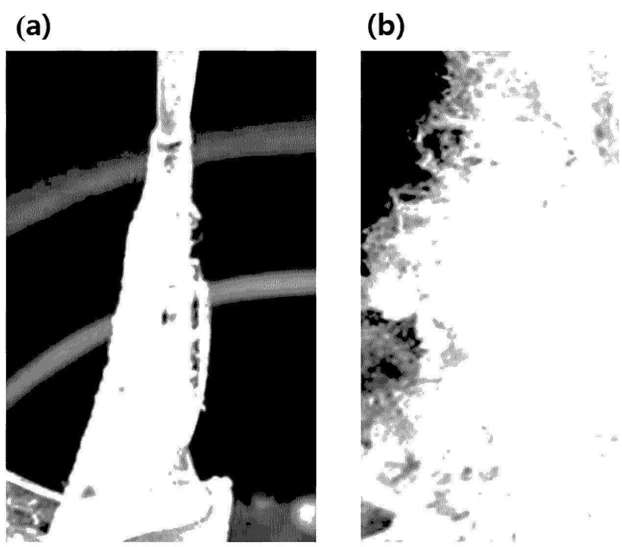




EP 4 644 460 A1

## Description

## [TECHNICAL FIELD]

CROSS-REFERENCE TO RELATED APPLICATION(S)

This application claims priority from and the benefit of Korean Patent Application No. 10-2023-0055419 filed on April 27, 2023 and Korean Patent Application No. 10-2024-0055648 filed on April 25, 2024 in the Korean Intellectual Property Office, the disclosures of which are incorporated herein by reference in their entirety.

The present disclosure relates to a poly(3-hydroxypropionic acid) polymer including a novel network structure and a method for preparing the same.

## [BACKGROUND]

Poly(3-hydroxypropionic acid) has a biodegradable characteristics, and owing to such eco-friendly characteristics, research on the use thereof has been actively conducted recently.

A method for preparing poly(3-hydroxypropionic acid) can be broadly classified into two types, wherein one is a method of performing polymerization using petrochemical based β-propiolactone(PL), and the other is a method of using bio-based 3-hydroxypropinic acid(3HP).

In the case of using PL, several synthesis steps must be carried out using ethylene oxide, which is disadvantageous in terms of economic efficiency as compared with the case of using 3HP.

In the case of polymerization using biosynthesis of 3HP, several steps such as freeze-drying, ultrasonication, and solvent extraction must be carried out to obtain poly(3-hydroxypropionic acid), and in this case, a large amount of solvent must be used. In the case of biosynthesis polymerized in this way, the bio content of poly(3-hydroxypropionic acid) is 100%, but due to the residue remaining after fermentation, it contains a large amount of organic nitrogen and has a high YI.

To solve the above problems, attempts have been made to perform a polycondensation of 3HP, but there are limitations in obtaining high molecular weight poly(3-hydroxypropionic acid) due to the byproduct in the form of cyclic oligomers. Attempts have been made to increase the molecular weight by subjecting a low molecular weight cyclic oligomer to a ROP(ring-opening polymerization), but there are difficulties in separation and purification.

Furthermore, a technology of synthesizing such a poly(3-hydroxypropionic acid) polymer so as to have a novel structure that realizes excellent physical properties for applying to a wider variety of product groups is required.

Therefore, there is a need to develop a method of preparing poly(3-hydroxypropionic acid) by polycondensation of 3HP, but preparing poly(3-hydroxypropionic acid) having a novel structure that realizes excellent physical properties and is easily applicable to a variety of product groups.

## [DETAILED DESCRIPTION OF THE INVENTION]

### [Technical Problem]

It is an object of the present disclosure to provide a poly(3-hydroxypropionic acid) polymer having a novel network structure.

It is another object of the present disclosure to provide a method for preparing the poly(3-hydroxypropionic acid) polymer.

### [Technical Solution]

Poly(3-hydroxypropionic acid) polymer

In order to achieve the above object, according to an embodiment of the present disclosure, there is provided a poly(3-hydroxypropionic acid) polymer, comprising a plurality of repeating units derived from 3-hydroxypropionic acid, which are represented by the following Chemical Formula 1, and having a network structure formed by bonding any one terminal group of the repeating units to a terminal group of another repeating unit by a reactive monomer, wherein an alpha value measured by a multi-angle light scattering(MALS) detector is 0.4 to 0.8.

[Chemical Formula 1]

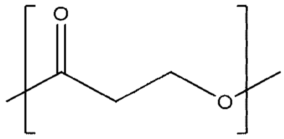

The term 'poly(3-hydroxypropionic acid) polymer' as used herein includes a repeating unit derived from 3-hydroxypropionic acid, and specifically, means a polymer including a repeating unit represented by Chemical Formula 1.

The poly(3-hydroxypropionic acid) polymer has biodegradable characteristics due to the molecular structure of the repeating units. Furthermore, the poly(3-hydroxypropionic acid) polymer according to the present disclosure is characterized by having a novel network structure obtained by polymerizing 3-hydroxypropionic acid with a reactive monomer under specific conditions, as described below.

The term "network structure" as used herein may mean containing at least two branched structures formed by bonding at least three or more repeating units to form a net structure, which is distinguished from a branched structure or a hyperbranched structure of multiple branches.

The poly(3-hydroxypropionic acid) polymer having a novel network structure has appropriate molecular weight characteristics, and also can exhibit a high degree of crosslinking and appropriate elasticity at the same time. This polymer usually has brittle characteristics that polymers with a high degree of crosslinking have, however, the polymer having a novel network structure of the present disclosure supplements elasticity by an empty space in the network structure, and thus is reduced in brittle characteristics, which makes it easy to apply to a variety of product groups.

Specifically, the poly(3-hydroxypropionic acid) polymer according to an embodiment of the disclosure has a structure in which any one terminal group of the repeating units represented by Chemical Formula 1 is bonded to a terminal group of another repeating unit by a reactive monomer, thereby forming a new network structure.

According to an embodiment of the disclosure, the poly(3-hydroxypropionic acid) polymer having a novel network structure includes a plurality of the repeating units represented by Chemical Formula 1, wherein any one terminal group of the repeating units is bonded to a terminal group of another repeating unit by a reactive monomer, thereby forming a new network structure.

Herein, the "terminal group of the repeating unit" means a terminal group derived by the reaction between 3-hydroxypropionic acid, which is a unit monomer forming the repeating unit, and a reactive monomer.

The alpha value of the poly(3-hydroxypropionic acid) polymer as measured by a multi-angle light scattering(MALS) detector is 0.4 to 0.8, preferably 0.5 to 0.8. The desired network structure can be achieved by satisfying the above range. Accordingly, the present disclosure can be produced into various molded products, and especially, even when produced in a foam shape, the net structure supports the foam so that the shape is maintained without collapsing even after final processing.

The alpha value measured by a multi-angle light scattering(MALS) detector is an index capable of grasping the structure of a polymer, and the alpha value means the constant value of the Mark-Houwink equation derived according to the multi-angle light scattering(MALS) detector. If the alpha value approaches 1 outside the above range, it means that the structure of the polymer is approaching linearity, which is not suitable. Furthermore, if the alpha value in the crosslinked structure is too low outside the above range, gelation occurs, which reduces processability and mechanical properties, so that the shape of the final polymer is hardly maintained in a foam shape, which makes it difficult to apply to a variety of product groups. The specific measurement method thereof will be described in more detail in Experimental Examples provided hereinafter.

The reactive monomer may include at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O). Preferably, the reactive monomer may be a polyfunctional monomer including a plurality of terminal reactive substituents, and thus is easy to form a novel network structure.

The reactive monomer may be at least one selected from among poly$C_{1-60}$ alkylene polyol or $C_{1-60}$ alkyl dicarboxylic acid, and poly$C_{1-60}$ alkylene polyol or $C_{1-60}$ alkyl dicarboxylic acid may be used simultaneously.

Herein, the poly$C_{1-60}$ alkylene polyol may include at least one selected from the group consisting of glycerol, 3-arm-poly(ethylene glycol)$_{n=2\sim15}$, 4-arm-poly(ethylene glycol)$_{n=2\sim10}$, erythritol, pentaerythritol, di(trierythritolpropane), xylitol, sorbitol, tripentaerythritol, inositol and β-cyclodextrin, but is not limited thereto.

Furthermore, the $C_{1-60}$ alkyl dicarboxylic acid may include at least one selected from the group consisting of malonic acid, succinic acid, adipic acid, 1,3,5-benzenetricarboxylic acid, 1,3,5-triazine-2,4,6-tricarboxylic acid, citric acid, and 2,2-bis(hydroxymethyl)butyric acid, but is not limited thereto.

According to an embodiment of the disclosure, the poly(3-hydroxypropionic acid) polymer may have the following structure, but is not limited thereto.

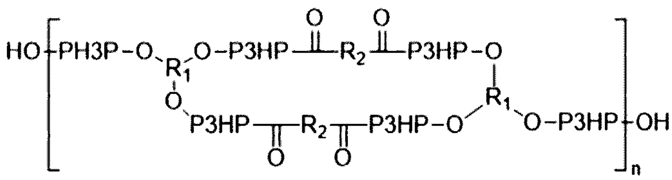

wherein, $R_1$ and $R_2$ may mean a structure derived from a reactive monomer.
n may be 1 to 100.

The melting temperature(Tm) of the poly(3-hydroxypropionic acid) polymer is 50 to 70°C. More preferably, the melting temperature is 51°C or more, 52°C or more, 68°C or less, 67°C or less, or 51 to 68°C or 52 to 67°C. By satisfying the above thermal characteristics, it is advantageous to achieve the desired effect.

Furthermore, the melting temperature(Tm) of the poly(3-hydroxypropionic acid) polymer may be 50 to 70°C, and the total enthalpy(ΔH) in the region may be less than 50 J/g.

Preferably, the polydispersity index(PDI) of the poly(3-hydroxypropionic acid) polymer is 3.0 to 20.0. More preferably, the polydispersity index is 3.1 or more, 3.3 or more, 3.5 or more, 4.0 or more, or 5.0 or more, and 19.5 or less, 19.4 or less, 19.0 or less, 18.0 or less, or 16.0 or less.

Preferably, the weight average molecular weight(Mw) of the poly(3-hydroxypropionic acid) polymer is 2,000 to 100,000. More preferably, the weight average molecular weight is 3,000 or more, 4,000 or more, 5,000 or more, 5,100 or more, 5,500 or more, 7,000 or more, or 9,000 or more, and 90,000 or less, 70,000 or less, 50,000 or less, 30,000 or less, 25,000 or less, 23,000 or less, 20,000 or less, 17,000 or less, 15,000 or less, or 13,000 or less.

Preferably, the number average molecular weight(Mn) of the poly(3-hydroxypropionic acid) polymer is 500 to 50,000. More preferably, the number average molecular weight is 700 or more, 900 or more, 1,000 or more, 1,500 or more, or 3,000 or more, and 30,000 or less, 15,000 or less, 10,000 or less, 9,000 or less, 7,000 or less, 5,000 or less, or 4,500 or less.

Method for preparing poly(3-hydroxypropionic acid) polymer

On the other hand, according to an embodiment of the present disclosure, a method for preparing the above-mentioned poly(lactic acid-3-hydroxypropionic acid) polymer is provided, which can be prepared from 3-hydroxypropionic acid, wherein 3-hydroxypropionic acid can be prepared through biosynthesis.

Therefore, preferably, the poly(3-hydroxypropionic acid) can have a bio content of 90% or more. The bio content can be determined by graphitizing a sample to be measured and then analyzing the content of radioactive isotope 14C (bio-derived) by ASTM D6866-22.

More specifically, the method for preparing a poly(3-hydroxypropionic acid) polymer comprises a first step of polymerizing 3-hydroxypropionic acid and a reactive monomer to form an oligomer; and a second step of polymerizing the oligomer to prepare a poly(3-hydroxypropionic acid) polymer having a network structure.

At this time, by adjusting the preparation conditions of the steps 1 and 2, a poly(3-hydroxypropionate) polymer having the above-mentioned network structure can be prepared. The details of the 3-hydroxypropionic acid and reactive monomer used herein can be similarly applied to the contents set forth above.

(Step 1)

The step 1 is a step of subjecting 3-hydroxypropionic acid and a reactive polymer to melt polymerization to prepare an oligomer. The melt polymerization means that the 3-hydroxypropionic acid and reactive polymer as reactants and the oligomer as a product maintains a liquid state.

The reactive monomer performs the function to bond a plurality of repeating units formed by 3-hydroxypropionic acid so that the polymer can form a new network.

The reactive monomer may include at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O). Preferably, the reactive monomer may be a polyfunctional monomer including a plurality of terminal reactive substituents, which makes it easy to form a novel network structure. The specific types of the reactive monomer may be similarly applied to all the contents set forth above.

Preferably, the reactive monomer may include at least one selected from among poly$C_{1-60}$ alkylene polyol or $C_{1-60}$ alkyl dicarboxylic acid, and preferably, may include both poly$C_{1-60}$ alkylene polyol and $C_{1-60}$ alkyl dicarboxylic acid. The specific types of the poly$C_{1-60}$ alkylene polyol and $C_{1-60}$ alkyl dicarboxylic acid may be similarly applied to all the contents set forth above.

The poly$C_{1-60}$ alkylene polyol may be contained in an amount of 0.1 to 15 mol%, preferably 0.5 to 10 mol%, relative to 100 mol of 3-hydroxypropionic acid. Furthermore, the $C_{1-60}$ alkyl dicarboxylic acid may be contained in an amount of 0.01 to 5 mol% , preferably 0.25 to 5 mol%, relative to 100 mol of 3-hydroxypropionic acid. By using each reactive monomer within the above content range, a novel network structure can be easily formed.

The step 1 may be carried out by adjusting the reaction temperature to a temperature of 80°C to 100°C. Preferably, the reaction temperature of the step 1 is 81°C or more, 82°C or more, 83°C or more, 84°C or more, or 85°C or more, and 99°C or less, 98°C or less, 97°C or less, 96°C or less, or 95°C or less.

Furthermore, the step 1 may be carried out under a pressure of 5 torr to 20 torr. Preferably, the pressure of the step 1 is 6 torr or more, 7 torr or more, 8 torr or more, or 9 torr or more, and 19 torr or less, 18 torr or less, 17 torr or less, 16 torr or less, or 15 torr or less.

Furthermore, the reaction time of the step 1 can be appropriately determined in consideration of the molecular weight, yield, and the like of the prepared oligomer, and the reaction is preferably carried out for 1 to 3 hours.

Preferably, the step 1 is carried out in the presence of a sulfonic acid-based catalyst. Preferably, the sulfonic acid-based catalyst is p-toluenesulfonic acid, m-xylene-4-sulfonic acid, 2-mesitylenesulfonic acid, or p-xylene-2-sulfonic acid. The catalyst is used in an amount of 0.1 to 0.5 mol% relative to 3-hydroxypropionic acid.

(Step 2)

The step 2 of the present disclosure is a step of further polymerizing the oligomer of the step 1 to prepare a poly(3-hydroxypropionate) polymer having a novel network structure.

Unlike step 1, the step 2 can be carried out under a lower pressure because the reactant is an oligomer.

Preferably, the reaction temperature of the step 2 is 75°C to 95°C. More preferably, the reaction temperature of the step 2 may be 80°C or more, or 85°C or more, and 94°C or less, 93°C or less, 92°C or less, or 91°C or less.

Preferably, the reaction pressure of the step 2 may be 5 torr or less. More preferably, the pressure of the step 2 is 4 torr or less, 3 torr or less, 2 torr or less, 1 torr or less, 0.5 torr or less, 0.4 torr or less, or 0.3 torr or less, and 0.01 torr or more, 0.02 torr or more, 0.03 torr or more, 0.04 torr or more, 0.05 torr or more, 0.06 torr or more, 0.07 torr or more, 0.08 torr or more, 0.09 torr or more, or 0.1 torr or more.

Furthermore, the reaction time of the step 2 can be appropriately determined in consideration of the molecular weight, yield, and the like of the prepared poly(3-hydroxypropionate) polymer, and the reaction is preferably carried out for 5 to 30 hours.

Preferably, the steps 1 and 2 are carried out for a total of 7 hours to 30 hours, more preferably 7 hours to 24 hours.

Meanwhile, since the step 2 is carried out subsequent to the step 1, the catalyst added in the step 1 also participates in the reaction in the step 2. Therefore, the catalyst described in the previous step 1 above can be applied even in the step 2.

Furthermore, according to an embodiment of the disclosure, the second step may be carried out by further adding a tin-based catalyst. Preferably, the tin-based catalyst is $SnCl_2$ or $Sn(oct)_2$. The catalyst is used in an amount of 0.001 to 0.5 mol% relative to 3-hydroxypropionic acid.

Meanwhile, before steps 1 and 2, the 3-hydroxypropionic acid and reactive monomer can be pretreated independently at 30°C to 100°C and 30 mbar to 150 mbar, if necessary. Through the pretreatment step, moisture present in the 3-hydroxypropionic acid and reactive monomer can be removed.

The poly(3-hydroxypropionic acid) polymer having a novel network structure prepared by the above-mentioned method has appropriate molecular weight characteristics, and can exhibit a high degree of crosslinking, and appropriate elasticity at the same time. This polymer usually has brittle characteristics that polymers with a high degree of crosslinking have, however, the polymer having a novel network structure of the present disclosure supplements elasticity by an empty space in the network structure, and thus is reduced in brittle characteristics (brittleness), which makes it easy to apply to a variety of product groups.

[Advantageous Effects]

As described above, the present disclosure can provide a poly(3-hydroxypropionic acid) polymer having a novel network structure by polymerizing 3-hydroxypropionic acid with a reactive monomer under specific conditions.

**[BRIEF DESCRIPTION OF THE DRAWING]**

FIG. 1 is a photograph evaluating the shape over time when the polymers of Examples and Comparative Examples were produced into molded products.

## [DETAILED DESCRIPTION OF THE EMBODIMENTS]

Hereinafter, the present disclosure will be described in more detail by way of examples. However, the following examples are for illustrative purposes only, and the contents of the present disclosure is not limited thereby.

## [Example and Comparative Example]

### Example 1

(Step 1)

3-Hydroxypropionic acid (70 g) from which moisture has been removed, 7.156 g of reactive monomer glycerol (A: 10 mol% relative to 3-HP), and 4.59 g of succinic acid (B: 5 mol% relative to 3-HP) were placed in a reactor, and 295.6 mg of p-TSA (p-toluenesulfonic acid) (0.2 mol% relative to 3-HP) as a catalyst was added thereto. The temperature and pressure in the reactor were maintained at 90°C and 10mbar (7.5 torr), respectively, and the reaction was carried out for 2 hours to prepare an oligomer.

(Step 2)

Then, the temperature and pressure in the reactor were adjusted to 80°C and 0.1 torr, respectively, and 157.4 mg of $SnOct_2$ (0.05 mol% relative to 3-HP) as an additional catalyst was added thereto, and the reaction was further carried out for 5 hours to prepare a poly(3-hydroxypropionic acid) polymer having a network structure.

### Examples 2 to 11

A poly(3-hydroxypropionic acid) polymer having a network structure was prepared in the same manner as in Example 1, except that the reaction conditions were changed as shown in Table 1 below.

### Comparative Example 1

(Step 1)

3-hydroxypropionic acid(60 g) from which moisture has been removed was placed in a reactor, and 253.4 mg of p-TSA (p-toluenesulfonic acid) (0.2 mol% relative to 3-HP) as a catalyst was added thereto. The temperature and pressure in the reactor were maintained at 90°C and 10 mbar(7.5 torr), respectively, and the reaction was carried out for 2 hours to prepare a 3-hydroxypropionic acid oligomer.

(Step 2)

Then, the temperature and pressure in the reactor were adjusted to 80°C and 0.1 torr, respectively, and the reaction was carried out for 5 hours to prepare a poly(3-hydroxypropionate) polymer.

### Comparative Examples 2 and 3

A poly(3-hydroxypropionic acid) polymer was prepared in the same manner as in Comparative Example 1, except that the reaction conditions were changed as shown in Table 1 below.

### Comparative Example 4

(Step 1) 70 g of 3-hydroxypropionic acid (3HP) whose moisture has been dried and 7.156g of glycerol (10 mol% relative to 3HP) were placed in a reactor, and oligomerization reaction was carried out using 295.6 mg of p-TSA (0.2 mol% relative to 3HP) as a catalyst at 90°C under 10 mbar(7.5 torr) for 2 hours.
(Step 2) 157.4 mg of $Sn(Oct)_2$ (0.05 mol% relative to 3HP) as a cocatalyst was added at a vacuum level of 0.1 torr and an additional polymerization reaction was carried out for 5 hours to prepare a branched polymer.

## [Experimental Example 1-Evaluation of physical properties of polymer]

The physical properties of the polymers prepared in Examples and Comparative Examples were evaluated by

the following methods.

1) Weight average molecular weight and molecular weight distribution

The weight average molecular weight, number average molecular weight, and polydispersity index of the polymers prepared in Examples and Comparative Examples were measured by a gel permeation chromatography(GPC, Waters Alliance e2695), and the results are shown in Table 1 below.

- Solvent: chloroform (eluent)
- Flow rate: 1.0 ml/min
- Column temperature: 40°C
- Standard: Polystyrene

2) Measurement of alpha value by multi-angle light scattering(MALS) detector

The alpha values of the polymers prepared in Examples and Comparative Examples were measured using a multi-angle light scattering(MALS) detector, and the results are shown in Table 1 below.

First, the polymer was dissolved in chloroform (stabilized with ETOH) at a concentration of 5 mg/mL to prepare a sample, and the mobile phase was prepared by filtering 1000 mL of chloroform (stabilized with ETOH) through a solvent clarification system. The radius of gyration(Rg) of the solvated chain of the polymer was measured using a multi-angle light scattering(MALS) detector, and a plot of intrinsic viscosity($\eta$) and absolute molecular weight(M; absolute MW) was derived therefrom. The constant Alpha($\alpha$) value was calculated using the Mark-Houwink equation of the following Mathematical Equation 1, and the results are shown in Table 3 below.

- RI(refractive index) measurement: DAWN8 (manufacturer: Wyatt)
- Visocmeter(viscosity) measurement: Viscostar III (manufacturer: Wyatt)
- Light scattering measurement: Optilab T-rEX (manufacturer: Wyatt)
- Stationary phase: 2x Agilent PLgel MIXED-B and C, 7.5 x 300 mm, 5 $\mu$m
- Mobile phase: chloroform (stabilized with ETOH) = 100 (v/v, %)
- Flow rate: 1.0 mL/min
- Stationary phase temperature: 40 °C
- Injection volume: 100 $\mu\ell$ (0.45 $\mu$m filtered)
- Analysis time: 35 min
- System calibration: polystyrene (Mp:135700)
- Chloroform refractive index: 1.45

[Mathematical Equation 1]

$$\log[\eta] = \alpha \log M + \log K$$

in Mathematical Equation 1,

[$\eta$] is the intrinsic viscosity (d$\ell$/g) of the polymer,
M is the absolute molecular weight (absolute MW) of the polymer,
and K is a constant.

[Table 1]

| Category | Reaction time (hr) | | Reactive monomer (content relative to 3-HP) | | Mn | Mw | PDI | Alpha |
|---|---|---|---|---|---|---|---|---|
| | 1st step | 2nd step | A(mol%) | B(mol%) | | | | |
| Example 1 | 2 | 5 | 10 | 5 | 1262 | 5104 | 4.05 | 0.5 |
| Example 2 | 2 | 8 | 10 | 5 | 1210 | 5620 | 4.65 | 0.5 |

(continued)

| Category | Reaction time (hr) | | Reactive monomer (content relative to 3-HP) | | Mn | Mw | PDI | Alpha |
|---|---|---|---|---|---|---|---|---|
| | 1st step | 2nd step | A(mol%) | B(mol%) | | | | |
| Example 3 | 2 | 5 | 5 | 2.5 | 931 | 7060 | 5.90 | 0.5 |
| Example 4 | 2 | 8 | 5 | 2.5 | 1024 | 9683 | 9.49 | 0.5 |
| Example 5 | 2 | 5 | 1 | 0.5 | 1032 | 7469 | 7.24 | 0.8 |
| Example 6 | 2 | 8 | 1 | 0.5 | 1283 | 12175 | 9.49 | 0.8 |
| Example 7 | 2 | 18 | 1 | 0.5 | 1217 | 23684 | 19.47 | 0.8 |
| Example 8 | 2 | 22 | 1 | 0.5 | 1764 | 28414 | 16.11 | 0.8 |
| Example 9 | 2 | 5 | 0.5 | 0.25 | 3461 | 12304 | 3.55 | 0.8 |
| Example 10 | 2 | 8 | 0.5 | 0.25 | 4144 | 16122 | 3.89 | 0.8 |
| Example 11 | 2 | 22 | 0.5 | 0.5 | 4363 | 20893 | 4.79 | 0.8 |
| Comparati ve Example 1 | 2 | 5 | - | - | 5000 | 8000 | 1.6 | 0.9 |
| Comparati ve Example 2 | 2 | 8 | - | - | 10000 | 80000 | 2 | 0.9 |
| Comparati ve Example 3 | 2 | 22 | - | - | 12000 | 32000 | 2.5 | 0.9 |
| Comparati ve Example 4 | 2 | 5 | 10 | - | 1129 | 2699 | 2.39 | 0.3 |
| Type of reactive monomer<br>A: Glycerol<br>B: Succinic acid | | | | | | | | |

3) Evaluation of DSC(differential scanning calorimetry) thermal characteristics

The thermal characteristics(Tg, Tm, cold crystallization (2nd heating result), Tc (1st cooling result), total enthalpy(ΔH)) of the polymers prepared in Examples and Comparative Examples were measured using a TA DSC250 model device under nitrogen gas flow conditions, and the results are shown in Table 2 below.

Heating at 5°C/min from 40°C to 190°C (1st heating)/maintaining at temperature of 190°C for 10 minutes
Cooling at 5°C/min from 190°C to -60°C (1st cooling)/maintaining at a temperature of -60°C for 10 minutes
Heating at 5°C/min from -60°C to 190°C (2nd heating)

[Table 2]

| Category | Tc | | Tg | Cold crystallization | | Tm | |
|---|---|---|---|---|---|---|---|
| | Temperature (°C) | ΔH (J/g) | Temperature (°C) | Temperature (°C) | ΔH (J/g) | Temperature (°C) | ΔH (J/g) |
| Example 2 | N.D | N.D | -33.15 | N.D | N.D | N.D | N.D |
| Example 4 | N.D | N.D | -22.57 | 28.29 | 14.01 | 52.13 | 13.99 |
| Example 8 | 34.9 | 49.1 | -25.61 | N.D | N.D | 66.55 | 49.72 |
| Comparative Example 3 | 32 | 65.2 | -20 | N.D | N.D | 71.9 | 69.4 |

Generally, if the crystallization speed is fast, the enthalpy of Tc is large, and cold crystallization is small or absent, and further, as the degree of crystallinity is higher, the enthalpy of Tm may be larger.

In addition, it can be confirmed that, when the degree of crystallinity is high, the strength of the material increases, but it is brittle and has no elasticity, however, in the case of a novel network structure as in the present disclosure, the

degree of crystallinity can be lowered to thereby reduce the brittle characteristics.

**[Experimental Example 2 - Evaluation of polymer shape]**

The polymers prepared in Examples and Comparative Examples were used to prepare final products and evaluate their shapes by the following method.

First, each of the polymers of Example 1 and Comparative Example 4 was dissolved in chloroform to a concentration of 10 wt.% to prepare samples. The samples were placed in a distillation device, and the pressure was changed to vacuum conditions to remove excess chloroform.

Next, the samples were injected to 1/3 of the Teflon mold, produced into a foam shape under vacuum conditions, and dried at 25°C for 18 hours.

It could be confirmed that in the case of Example 1, the foam shape was maintained as it was even after 24 hours had passed since drying (see FIG. 1(b)), however, in the case of Comparative Example 4, the foam shape was not maintained when 1 hour had passed since drying, and changed into a film shape (see FIG. 1 (a)).

## Claims

**1.** A poly(3-hydroxypropionic acid) polymer,

comprising a plurality of repeating units derived from 3-hydroxypropionic acid, which are represented by the following Chemical Formula 1, and
having a network structure formed by bonding any one terminal group of the repeating units to a terminal group of another repeating unit by a reactive monomer,
wherein an alpha value measured by a multi-angle light scattering(MALS) detector is 0.4 to 0.8.

[Chemical Formula 1]

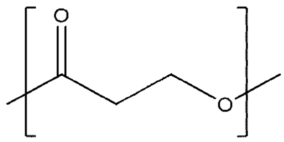

**2.** The poly(3-hydroxypropionic acid) polymer according to claim 1, wherein:
the network structure includes at least two branched structures formed by bonding at least three or more repeating units.

**3.** The poly(3-hydroxypropionic acid) polymer according to claim 1, wherein:
the reactive monomer includes at least one terminal reactive substituent selected from the group consisting of a hydroxyl group(-OH), a carboxyl group(-COOH), an amino group(-$NH_2$), a cyano group(-CN), a thiol group(-SH), and an isocyanate group(-N=C=O).

**4.** The poly(3-hydroxypropionic acid) polymer according to claim 1, wherein:
the reactive monomer is at least one selected from among poly$C_{1-60}$ alkylene polyol or $C_{1-60}$ alkyl dicarboxylic acid.

**5.** The poly(3-hydroxypropionic acid) polymer according to claim 4, wherein:
the poly$C_{1-60}$ alkylene polyol is at least one selected from the group consisting of glycerol, 3-arm-poly(ethylene glycol)$_{n=2\sim15}$, 4-arm-poly(ethylene glycol)$_{n=2\sim10}$, erythritol, pentaerythritol, di(trierythritolpropane), xylitol, sorbitol, tripentaerythritol, inositol and β-cyclodextrin.

**6.** The poly(3-hydroxypropionic acid) polymer according to claim 4, wherein:
the $C_{1-60}$ alkyl dicarboxylic acid is at least one selected from the group consisting of malonic acid, succinic acid, adipic acid, 1,3,5-benzenetricarboxylic acid, 1,3,5-triazine-2,4,6-tricarboxylic acid, citric acid, and 2,2-bis(hydroxymethyl) butyric acid.

**7.** The poly(3-hydroxypropionic acid) polymer according to claim 1, wherein:
a weight average molecular weight(Mw) of the poly(3-hydroxypropionic acid) polymer is 2,000 to 100,000.

**8.** The poly(3-hydroxypropionic acid) polymer according to claim 1, wherein:
a number average molecular weight(Mn) of the poly(3-hydroxypropionic acid) polymer is 500 to 50,000.

**9.** The poly(3-hydroxypropionic acid) polymer according to claim 1, wherein:
a polydispersity index(PDI) of the poly(3-hydroxypropionic acid) polymer is 3.0 to 20.0.

**10.** The poly(3-hydroxypropionic acid) polymer according to claim 1, wherein:
a melting temperature(Tm) of the poly(3-hydroxypropionic acid) polymer is 50 to 70°C, and a total enthalpy ($\Delta H$) in the region is less than 50 J/g.

**11.** A method for preparing the poly(3-hydroxypropionic acid) polymer as set forth in claim 1, the method comprising:

a first step of polymerizing 3-hydroxypropionic acid and a reactive monomer to form an oligomer; and
a second step of polymerizing the oligomer to prepare a poly(3-hydroxypropionic acid) polymer having a network structure.

**12.** The method for preparing the poly(3-hydroxypropionic acid) polymer according to claim 11, wherein:

the reactive monomer includes at least one terminal reactive substituent selected from the group consisting of a hydroxyl group(-OH), a carboxyl group(-COOH), an amino group($-NH_2$), a cyano group(-CN), a thiol group(-SH), and an isocyanate group(-N=C=O).

**13.** The method for preparing the poly(3-hydroxypropionic acid) polymer according to claim 11, wherein:
the reactive monomer is at least one selected from among poly$C_{1-60}$ alkylene polyol or $C_{1-60}$ alkyl dicarboxylic acid.

**14.** The method for preparing the poly(3-hydroxypropionic acid) polymer according to claim 13, wherein:

the poly$C_{1-60}$ alkylene polyol is contained in an amount of 0.1 to 15 mol% relative to 100 mol of 3-hydroxypropionic acid, and
the $C_{1-60}$ alkyl dicarboxylic acid is contained in an amount of 0.01 to 5 mol% relative to 100 mol of 3-hydroxypropionic acid.

【FIG. 1】

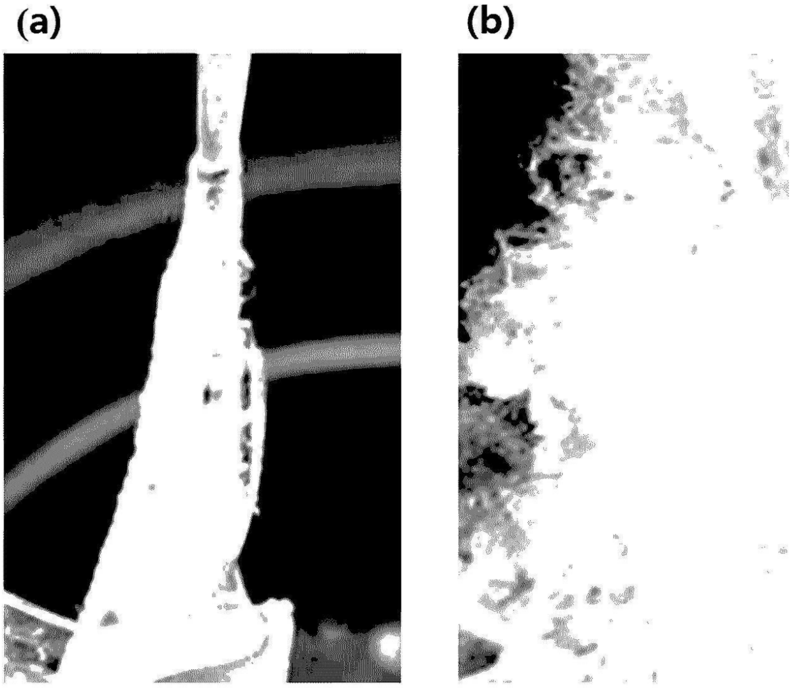

## INTERNATIONAL SEARCH REPORT

International application No.
**PCT/KR2024/005649**

**A. CLASSIFICATION OF SUBJECT MATTER**

**C08G 63/60**(2006.01)i; **C08G 63/78**(2006.01)i

According to International Patent Classification (IPC) or to both national classification and IPC

**B. FIELDS SEARCHED**

Minimum documentation searched (classification system followed by classification symbols)

C08G 63/60(2006.01); B32B 27/36(2006.01); C08G 63/06(2006.01); C08G 63/08(2006.01); C08G 63/78(2006.01); C08G 63/91(2006.01); C08G 77/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 3-하이드록시프로피온산(3-hydroxypropionic acid), 말단기(terminal group), 반응성 단량체(reactive monomer), 폴리올(polyol), 디카르복시산(dicarboxylic acid), 네트워크 (network)

**C. DOCUMENTS CONSIDERED TO BE RELEVANT**

| Category* | Citation of document, with indication, where appropriate, of the relevant passages | Relevant to claim No. |
|---|---|---|
| Y | WO 2022-235112 A1 (LG CHEM, LTD.) 10 November 2022 (2022-11-10)<br>See paragraphs [0161]-[0175], [0193] and [0200]; and claims 1-16. | 1-14 |
| Y | US 2012-0027973 A1 (WAUTIER, H.) 02 February 2012 (2012-02-02)<br>See paragraphs [0017], [0018], [0068], [0069], [0102], [0103], [0115] and [0116]; and claims 1 and 4-6. | 1-14 |
| Y | WO 2016-173640 A1 (SOLVAY SA) 03 November 2016 (2016-11-03)<br>See paragraphs [0058] and [0062]; and claims 1-15. | 1-14 |
| A | WO 2022-235113 A1 (LG CHEM, LTD.) 10 November 2022 (2022-11-10)<br>See paragraphs [0196]-[0211], [0228] and [0235]; and claims 1-18. | 1-14 |
| A | KR 10-2023-0020930 A (LG CHEM, LTD.) 13 February 2023 (2023-02-13)<br>See entire document. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2024** | **22 July 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2024/005649

C. DOCUMENTS CONSIDERED TO BE RELEVANT

| Category* | Citation of document, with indication, where appropriate, of the relevant passages | Relevant to claim No. |
|---|---|---|
| A | KR 10-2021-0038251 A (LG CHEM, LTD.) 07 April 2021 (2021-04-07)<br>See entire document. | 1-14 |

Form PCT/ISA/210 (second sheet) (July 2022)

**INTERNATIONAL SEARCH REPORT**
**Information on patent family members**

International application No.
**PCT/KR2024/005649**

| Patent document cited in search report | Publication date (day/month/year) | Patent family member(s) | Publication date (day/month/year) |
|---|---|---|---|
| WO 2022-235112 A1 | 10 November 2022 | CN 117242113 A | 15 December 2023 |
| | | EP 4317244 A1 | 07 February 2024 |
| | | JP 2024-518054 A | 24 April 2024 |
| | | KR 10-2022-0151568 A | 15 November 2022 |
| | | US 2024-0084070 A1 | 14 March 2024 |
| US 2012-0027973 A1 | 02 February 2012 | CA 2757239 A1 | 07 October 2010 |
| | | CA 2757239 C | 09 May 2017 |
| | | CN 102414244 A | 11 April 2012 |
| | | CN 102414244 B | 01 April 2015 |
| | | CN 104725623 A | 24 June 2015 |
| | | CN 104725623 B | 12 April 2017 |
| | | EP 2414428 A1 | 08 February 2012 |
| | | FR 2944021 A1 | 08 October 2010 |
| | | FR 2944021 B1 | 08 October 2010 |
| | | JP 2012-522859 A | 27 September 2012 |
| | | JP 5631970 B2 | 26 November 2014 |
| | | US 10035876 B2 | 31 July 2018 |
| | | US 2015-0183926 A1 | 02 July 2015 |
| | | US 8987343 B2 | 24 March 2015 |
| | | WO 2010-112602 A1 | 07 October 2010 |
| WO 2016-173640 A1 | 03 November 2016 | CA 2983473 A1 | 03 November 2016 |
| | | CN 107531891 A | 02 January 2018 |
| | | EP 3289001 A1 | 07 March 2018 |
| | | JP 2018-514623 A | 07 June 2018 |
| | | US 2018-0171072 A1 | 21 June 2018 |
| WO 2022-235113 A1 | 10 November 2022 | CN 117242114 A | 15 December 2023 |
| | | EP 4317245 A1 | 07 February 2024 |
| | | JP 2024-518053 A | 24 April 2024 |
| | | KR 10-2022-0151567 A | 15 November 2022 |
| | | US 2024-0076441 A1 | 07 March 2024 |
| KR 10-2023-0020930 A | 13 February 2023 | None | |
| KR 10-2021-0038251 A | 07 April 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230055419
- KR 1020240055648